# EUROPEAN PATENT SPECIFICATION

(11) **EP 3 691 312 B1**
(45) Date of publication and mention of the grant of the patent: **06.12.2023**
(21) Application number: 20154267.7
(22) Date of filing: 29.01.2020
(51) Int. Cl.: B62J 45/20, B62J 1/08, B62K 25/08, B62K 25/28, B62M 25/08, H04W 4/80, B62M 9/122, B62M 9/132, H04W 4/18, H04W 84/00

(54) **SYSTEM FOR A BICYLCE**
SYSTEM FÜR EIN FAHRRAD
SYSTÈME POUR BICYCLETTE

(30) Priority: 29.01.2019 US 201962798080 P; 05.02.2019 US 201916268026
(43) Date of publication of application: 05.08.2020
(60) Divisional application: 23204289.5
(73) Proprietor: SRAM, LLC., Chicago, IL 60607 (US)
(72) Inventor: Ho, Alexander Kon-I, Chicago, IL 60642 (US)
(74) Representative: Thum, Bernhard

(56) References cited:
- EP-A2- 2 719 616
- US-A1- 2019 002 053
- US-B1- 9 491 788

## Description

### BACKGROUND

A bicycle includes various components that allow a user to control the operation of the bicycle. For instance, the bicycle may include a drivetrain where one or more gears can be selectably engaged with a drive chain to modify pedaling cadence and resistance. Correspondingly, the bicycle may include controller devices that receive input from the user to cause the drive chain to engage different gears.

Document US 9,491,788 B1 discloses a wireless system in which bicycle components, such as controller devices and operation-enacting devices, have respective wireless communication units that are configured to wirelessly transmit identification information of the bicycle component to a terminal device, such as a network controller device. Each bicycle component wirelessly receives identification information of another bicycle component from the terminal device for wirelessly pairing one bicycle component with another bicycle component.

Further, document US 2019/002053 A1 presents a bicycle electrical component having a wireless communication unit through which an operation-enacting device can wirelessly communicate with a paired controller device.

From document EP 2 719 616 A2 electromechanical shifting systems are known having wirelessly actuated bicycle gear changes, wherein respective components of the wireless control systems are pairable to enable a wireless communication therebetween, wherein the shift signal contains a device-ID and a device type.

The present invention addresses the problem of including various components in a bicycle that allow a user to control the operation of the bicycle. The problem is solved by a system for a bicycle according to claim 1.

### SUMMARY

According to aspects of the present disclosure, embodiments provide systems, devices and methods for controlling components on a bicycle. According to the invention, a system for a bicycle includes a plurality of controller devices, wherein each controller device includes at least one respective input element configured to receive input from a user. The system includes a plurality of operation-enacting devices, wherein each operation-enacting device is configured to enact at least one respective operation on the bicycle. The system includes a network coordinator device configured to (i) establish a wireless network that enables communications between the network coordinator device, the controller devices, and the operation-enacting devices, and (ii) transmit to the operation-enacting devices, via the wireless network, a roster identifying the controller devices paired to the wireless network and the operation-enacting devices paired to the wireless network. The controller devices are further configured to transmit to the operation-enacting devices, via the wireless network, signals indicating input received by the input elements of the controller devices. The operation-enacting devices are configured to process a default set of assignments to determine, based on the roster received from the network coordinator device, how the operation-enacting devices enact the operations responsive to the signals received from the controller devices.

According to another example embodiment, a network coordinator device for a bicycle includes a first communication interface configured to communicate wirelessly with a plurality of controller devices and a plurality of operation-enacting devices. Each controller device includes at least one respective input element configured to receive input from a user, and each operation-enacting device is configured to enact at least one respective operation on the bicycle. The network coordinator device includes one or more processors configured to execute program instructions stored on computer-readable media, which when executed cause the one or more processors to: (i) establish, via the first communication interface, a pairing session that allows the controller devices and the operation-enacting devices to be paired to a wireless network, and (ii) transmit to the operation-enacting devices, via the first communication interface, a roster identifying the controller devices and the operation-enacting devices paired to the wireless network. The wireless network allows the controller devices to transmit to the operation-enacting devices signals indicating input received by the input elements of the controller devices, thereby causing the operation-enacting devices to enact the operations based on the roster.

According to yet another example embodiment, a controller device for a bicycle includes at least one input element configured to receive input from a user and to provide a signal in response to the input. The controller device includes a communication interface configured to communicate wirelessly with a network coordinator device and a plurality of operation-enacting devices, and is further configured to transmit a device type identification to the network coordinator device. The network coordinator device is configured to establish a pairing session to pair the controller device, other controller devices, and the operation-enacting devices to a wireless network, the network coordinator device pairing the controller device to the wireless network only if the device type identification is different from device type identifications associated with the other controller devices and the operation-enacting devices. The communication interface is further configured to transmit, via the wireless network, the signal from the at least one input element to the operation-enacting devices, the signal causing one of the operation-enacting devices to enact at least one operation on the bicycle.

According to a further embodiment, an operation-enacting device for a bicycle includes at least one movable component configured to modify an operative state of the bicycle. The operation-enacting device includes a communication interface configured to communicate wirelessly with a network coordinator device, a plurality of controller devices and other operation-enacting devices. The network coordinator device establishes a pairing session to pair the operation-enacting device, the controller devices, and other operation-enacting devices to a wireless network. The communication interface receives (i) from the network coordinator device, a roster identifying the controller devices and other operation-enacting devices paired to the wireless network, and (ii) from the controller devices, signals indicating input received by input elements of the controller devices. Based on the roster received from the network coordinator, the at least one movable component modifies the operative state of the bicycle responsive only to the signals from a single assigned controller device or a single assigned particular combination of controller devices.

### BRIEF DESCRIPTION OF DRAWINGS

FIG. 1A illustrates a right-side view of an example road bicycle that can implement aspects of the present disclosure.
FIG. 1B illustrates a schematic diagram of a handlebar assembly of the example road bicycle shown in FIG. 1A and other components coupled to the handlebar assembly.
FIG. 1C illustrates a side view of a front derailleur of the example road bicycle shown in FIG. 1A.
FIG. 1D illustrates a side view of a rear derailleur of the example road bicycle shown in FIG. 1A.
FIG. 1E illustrates a side view of a right controller device of the example road bicycle shown in FIG. 1A coupled to a right drop bar.
FIG. 2A illustrates a right-side view of an example mountain bicycle that can implement aspects of the present disclosure.
FIG. 2B illustrates a schematic diagram of a handlebar assembly of the example mountain bicycle shown in FIG. 2A and other components coupled to the handlebar assembly.
FIG. 2C illustrates a side view of a seat post assembly, with a saddle installed thereon, of the example mountain bicycle shown in FIG. 2A.
FIG. 3 illustrates an example system for controlling different combinations of operation-enacting devices on a bicycle, according to aspects of the present disclosure.
FIG. 4A illustrates an example scenario where operation-enacting devices respond to signals from controller devices according to a first set of assignments, according to aspects of the present disclosure.
FIG. 4B illustrates an example scenario where operation-enacting devices respond to signals from controller devices according to a second set of assignments, according to aspects of the present disclosure.
FIG. 4C illustrates an example scenario where operation-enacting devices respond to signals from controller devices according to a third set of assignments, according to aspects of the present disclosure.
FIG. 5 illustrates a flow chart of an embodiment for a method of establishing a wireless network between controller devices and operation-enacting devices of a bicycle.
FIG. 6 illustrates a flow chart of an embodiment for a method of method for controlling operation-enacting devices of a bicycle.
FIG. 7 illustrates a flow chart of an embodiment for a method of modifying the default or current set of assignments of a bicycle.

Other aspects and advantages of the embodiments disclosed herein will become apparent upon consideration of the following detailed description, wherein similar or identical structures have similar reference numerals. Various embodiments of the invention will be described herein with reference to the drawings. It will be understood that the drawings and the description set out herein are provided for illustration only and do not limit the invention as defined by the claims appended hereto and any and all their equivalents.

### DETAILED DESCRIPTION

According to aspects of the present disclosure, embodiments provide systems, devices and methods for controlling components on a bicycle. The embodiments employ a plurality of controller devices that receive input from a user to control operation-enacting devices on the bicycle. Operation-enacting devices generally include at least one movable component configured to modify an operative state of the bicycle. The controller devices and the operation-enacting devices are paired to a wireless network. When a particular controller device receives an input from the user, the particular controller device sends a corresponding signal to the operation-enacting devices paired to the network. Embodiments employ a set of assignments to determine which, if any, of the operation-enacting devices responds to the signal from the particular controller device. Advantageously, the set of assignments can be modified by the user according to the user's preferences. In other words, the embodiments provide a reconfigurable control system for the components of the bicycle.

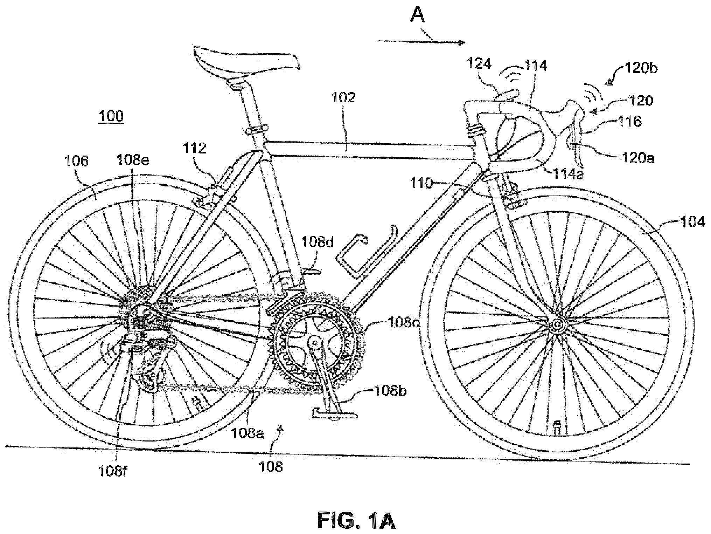

Although the ability to reconfigure the control system may be a desirable feature, there may be concern over whether unknown devices can access and make unwanted modifications to the control system over the wireless network. The embodiments, however, can secure the control system against such access by unknown devices. According to one approach, the embodiments initiate a pairing session that allows the user to select controller devices and operation-enacting devices for the wireless network. Once the pairing session is complete, the roster of devices paired to the network is fixed and unchangeable, even though the assignments between the controller devices and the operation-enacting devices already on the network can still be changed by the user. As such, unknown devices cannot join the wireless network and interfere with the control system. According to another approach, the embodiments may not allow duplicate device types to be paired to the wireless network, so that an unknown device cannot imitate another device type that has already been selected for pairing. According to yet another approach, the embodiments may only permit each operation enacted by an operation-enacting device to occur in response to the signals from a single assigned controller device or a single assigned particular combination of controller devices, thereby reducing the likelihood of an unwanted response by an operation-enacting device to a signal from an unknown device. Moreover, the embodiments may employ a proprietary network protocol to enhance security by limiting access to the wireless network to devices that can operate under the protocol.FIG. 1A illustrates a right side view of an example road bicycle 100. The bicycle 100 includes a frame 102, a front wheel 104, a rear wheel 106, and a drivetrain 108. The front wheel 104 and the rear wheel 106 are rotatably coupled to the frame 102. The bicycle includes a front brake 110 for braking the front wheel 104 and a rear brake 112 for braking the rear wheel 106. To allow a user to steer the bicycle 100, the bicycle 100 includes a handlebar assembly 114 attached to the frame 102.

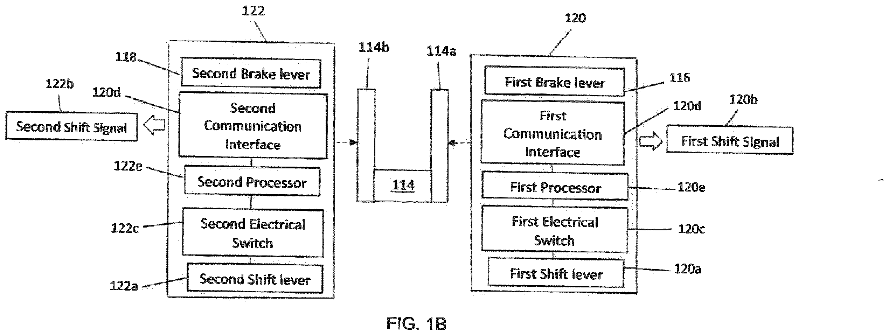

FIG. 1B illustrates a schematic diagram depicting the handlebar assembly 114 and other components coupled to the handlebar assembly 114. As shown in FIGS. 1A and/or 1B, the handlebar assembly 114 includes a right drop bar 114a and a left drop bar 114b to accommodate the left and right hands of the user, respectively. Additionally, the bicycle 100 includes a first or right controller device 120 coupled to the right drop bar 114a. The first controller device 120 includes a first or right brake lever 116 to allow the user to operate the rear brake 112. Correspondingly, the bicycle 100 includes a second or left controller device 122 coupled to the left drop bar 114b. The second controller device 122 includes a second or left brake lever 118 to allow the user to operate the front brake 110.

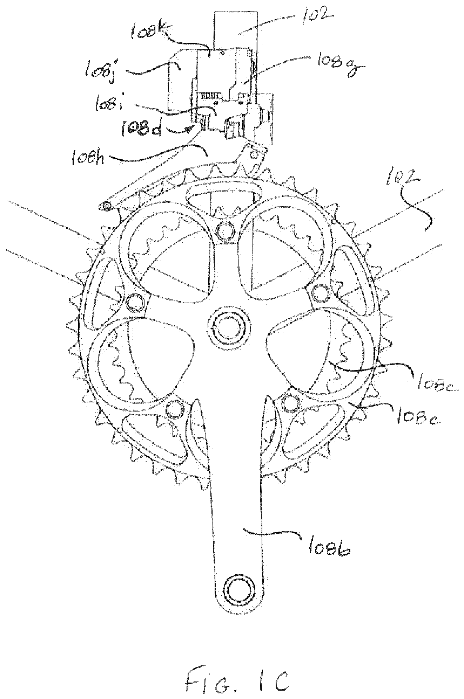

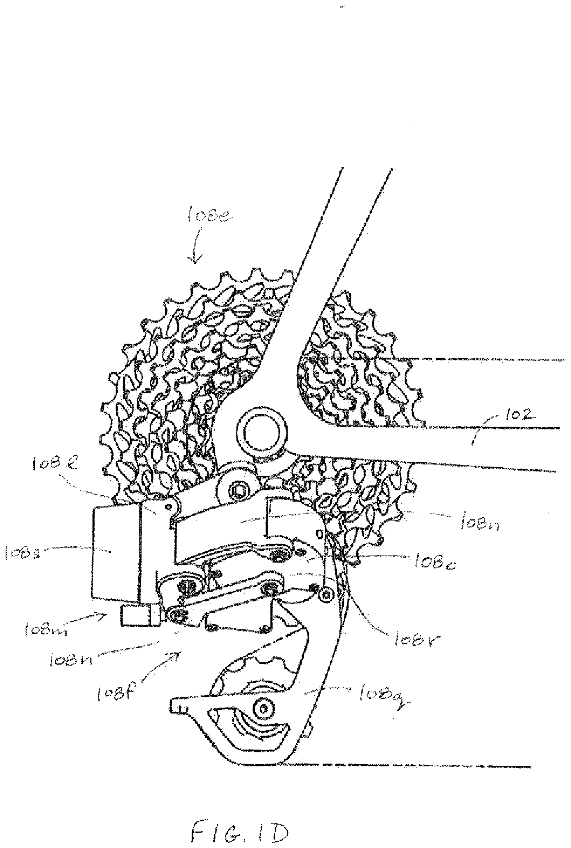

As shown in FIG. 1A, 1C and 1D, the drivetrain 108 includes a drive chain 108a, a front crank 108b, front chainrings 108c, a front gear changer such as an electromechanical front derailleur 108d, rear sprockets 108e, and a rear gear changer such as an electromechanical rear derailleur 108f. The front chainrings 108c are coupled to the front crank 108b. The diameters and number of teeth on the front sprockets 108c may differ from each other. The rear sprockets 108e are coaxially mounted to the rear wheel 106. The diameters and the numbers of teeth on the rear sprockets 108e may gradually decrease from left to right. Alternatively, the diameters and the numbers of teeth on the rear sprockets 108e may gradually decrease from right to left. The chain 108a engages a selected chainring 108c and a selected sprocket 108e.

To drive the bicycle 100, the user can pedal to rotate the front crank 108b relative to the frame 102. Rotation of the front crank 108b causes the selected chainring 108c to rotate and the chain 108a to move through the drivetrain 108. Movement of the chain 108a causes corresponding rotation of the selected sprocket 108e and thus the rear wheel 106. Rotation of the rear wheel 106 against the ground may propel the bicycle 100 in a forward direction. The front and/or forward orientation and movement of the bicycle 10 is indicated by the direction of arrow "A." Further, other terms relating to direction may be used herein. For example, the "inboard" and "outboard," and "left" and "right" may be used. The terms "right" and "left," and "inboard" and "outboard" describe a position between parts or items and a vertical plane substantially bisecting the bicycle or a direction toward or away from the vertical plane substantially bisecting the bicycle. Moreover, terms such as "front" and "rear" referred to bicycle mechanisms conventionally mounted to the bicycle and with the bicycle oriented in the forward direction.

The selected chainring 108c and the selected sprocket 108e, in combination, determine a gear ratio for driving the bicycle 100. Operation of the front derailleur 108d allows the user to change the selected chainring 108c engaged by the chain 108a. In particular, the front derailleur 108d can be actuated to shift the chain 108a left or right from one chainring 108c to the other. The front derailleur 108d is shown as a wireless electrically-actuated front derailleur mounted to the frame 102. The front derailleur 108d may include a base member 108g mounted to the bicycle frame 102 and a chain guide assembly 108h or cage movably connected to the base member 108g by a front linkage 108i in the form of a parallelogram. A front power supply108j, in this embodiment a removable battery, may be mounted on the front derailleur 108d. The front power supply 108j may supply power to a front motor unit 108k. The front motor unit 108k is configured to supply torque to the components of the front derailleur 108d to move the chain guide assembly 108h relative to the front base member 108g such that the front derailleur 108d may shift the chain 108a between the front sprockets 108c.

Meanwhile, operation of the rear derailleur 108f allows the user to change the selected sprocket 108e engaged by the chain 108a. In particular, the rear derailleur 108f can be actuated to shift the chain 108a left or right from one sprocket 108e to another. The rear derailleur 108f is shown as a wireless electrically-actuated rear derailleur mounted to the frame 102. The rear derailleur may include a base member 108l (e.g., a b-knuckle) that is mounted to the bicycle frame 102. A linkage 108m may include two links 108n that are pivotally connected to the base member 1081. A movable member 108o (e.g., a p-knuckle) may be connected to the linkage 108m. A chain guide assembly 108q or cage may be configured to engage and maintain tension in the chain 108a and may be pivotally connected to a part of the movable member 108o.

A motor unit 108r and rear power supply 108s, in this embodiment a removable battery, are disposed on the rear derailleur 108f. The battery 108s supplies power to the motor unit 108r. In this embodiment, the motor unit 108r is disposed in the movable member 108o. Alternatively, the motor unit 108r may be disposed in one of the links 108n or in the base member 1081. The motor unit 108r may include a motor and a gear transmission. The motor unit 108r may be coupled with the linkage 108m to laterally move the cage 108q and thus shift the chain 108a among the rear sprockets 108e.

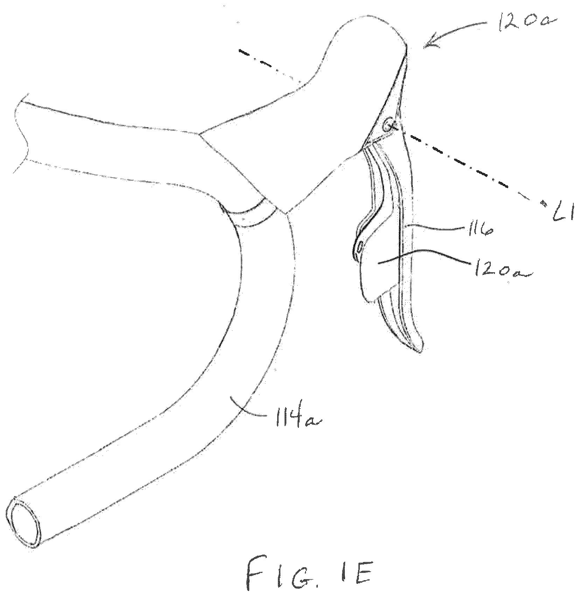

Looking to FIGS. 1A, 1B and 1E, to allow the user to operate the front derailleur 108d or the rear derailleur 108f, the first and second controller devices 120, 122 include first and second electrical switches 120c, 122c, that are actuated by first and second input elements, in this embodiment first and second shift levers 120a, 122a, respectively. The first shift lever 120a is configured to receive a right input from the right hand of the user and actuate the first electrical switch 120c. The second shift lever 122a configured to receive a left input from the left hand of the user and actuate the second electrical switch122c. The first shift lever 120a may be positioned behind to the first brake lever 116, while the second shift lever 122a may be positioned behind to the second brake lever 118.

To provide the right input to the first shift lever 120a, the user can manually apply pressure on the right side of the first shift lever 120a. In response, the first shift lever 120a may pivot about a first shift lever axis L1 from an initial rest position to a shift actuation position. The first shift lever 120a may be biased with a spring or the like so that when the manual pressure is no longer applied by the user, the first shift lever 120a returns to the initial rest position. Similarly, to provide the left input to the second shift lever 122a, the user can manually apply pressure on the left side of the second shift lever 122a. In response, the second shift lever 122a may pivot about a second shift lever axis L2 (not shown) from an initial rest position to a shift actuation position. The second shift lever 122a may be biased with a spring or the like so that when the manual pressure is no longer applied by the user, the second shift lever 122a returns to the left starting position.

The first and second controller devices 120, 122 include first and second controller processors 120e, 122e, which electronically process the manual input received by the first shift lever 120a and the second shift lever 122a, respectively. In particular, the right input triggers a first controller communication interface 120d to wirelessly send a first shift signal 120b, and left input triggers a second controller communication interface 122d to wirelessly send a second shift signal 122b. Correspondingly, the front derailleur 108d and the rear derailleur 108f include communication interfaces and processors that are configured to receive and electronically process the first shift signal 120b and/or the second shift signal 122b to determine a designated response.

In a first scenario, the user provides the right input via the first shift lever 120a but does not provide the left input via the second shift lever 122a. In response, the first controller device 120 sends the first shift signal 120b, while the left controller device 122 sends no signal. When the rear derailleur 108f receives the first shift signal 120b with no second shift signal 122b, the rear derailleur 108f shifts the chain 108a to engage the next smaller sprocket 108e to the right or performs a downshift. Meanwhile, when the front derailleur 108d receives the first shift signal 120b with no second shift signal 122b, the front derailleur 108d remains idle.

In a second scenario, the user provides the left input via the second shift lever 122a but does not provide the right input via the right shift lever 120a. In response, the second controller device 122 sends the second shift signal 122b, while the first controller device 120 sends no signal. When the rear derailleur 108f receives the second shift signal 122b with no first shift signal 120b, the rear derailleur 108f shifts the chain 108a to engage the next larger sprocket 108e to the left or performs a upshift. Meanwhile, when the front derailleur 108d receives the second shift signal 122b with no second shift signal 120b, the front derailleur 108d remains idle.

In a third scenario, the user simultaneously provides the right input via the first shift lever 120a and the left input via the second shift lever 122a. In response, the first controller device 120 sends the first shift signal 120b, and the second controller device 122 sends the second shift signal 122b. When the rear derailleur 108f receives the first shift signal 120b and the second shift signal 122b simultaneously or within a certain time period, the rear derailleur 108f remains idle. Meanwhile, when the front derailleur 108d receives the first shift signal 120b and the second shift signal 122b simultaneously or within a certain time period, the front derailleur 108d shifts the chain 108a left or right to engage a different chainring 108c. In some cases, the drivetrain 108 includes only two chainrings 108c, so the simultaneous right input and left input causes the chain 108a to alternate between the two chainrings 108c.

In some embodiments, the user can manually apply pressure to the first shift lever 120a and/or the second shift lever 122a for varying amounts of time. For instance, without applying pressure to the second shift lever 122a, the user may apply continuous pressure to keep the first shift lever 120a in the left final position for a period that exceeds a threshold amount of time, e.g., approximately one second. In response, the first controller device 120 sends the first shift signal 120b for a corresponding amount of time, i.e., until the user releases the pressure on the first shift lever 120a. When the rear derailleur 108f receives the first shift signal 120b, the rear derailleur 108f determines that the first shift signal 120b exceeds a threshold amount of time. In response, rather than merely shifting the chain 108a to engage the next sprocket 108e to the right, the rear derailleur 108f shifts the chain 108a repeatedly over multiple sprockets 108e to the right until the user releases the pressure on the first shift lever 120a and the first shift signal 120b ceases, or until the chain 108a reaches the right-most sprocket 108e. Alternatively, to shift the chain 108a repeatedly over multiple sprockets 108e to the left, the user may apply continuous pressure to the left shift lever 122a for a period that exceeds the threshold amount of time.

As shown in FIGS. 1A-B, the first controller device 120 and the second controller device 122 employ the first shift lever 120a and the second shift lever 122a as respective input elements to generate corresponding wireless shift signals 120b, 122b to actuate the front derailleur 108d and the rear derailleur 108f. Alternative embodiments, however, may include controller devices with different configurations to control a front derailleur and/or a rear derailleur. For instance, a bicycle may include aerobars with pushbuttons instead of drop bars with shift levers, where the pushbuttons act as input elements that can be pressed by the user to generate wireless signals which can be received and processed by the front derailleur and the rear derailleur. Also, while some controller devices may be coupled to handlebar assemblies, other controller devices may be coupled to other areas of a bicycle, such as locations throughout the frame. Furthermore, other types of controller devices are contemplated. For instance, a unified shifter device may be employed, where the user can press one or more pushbuttons on a mounted box to send signals that control the front derailleur and/or the rear derailleur. Alternatively, a pedal sensor may be employed to receive input from the user via the user's pedaling action and the front derailleur and/or the rear derailleur may respond to a signal from the pedal sensor, e.g., select gears to maintain a desired cadence or pedal resistance.

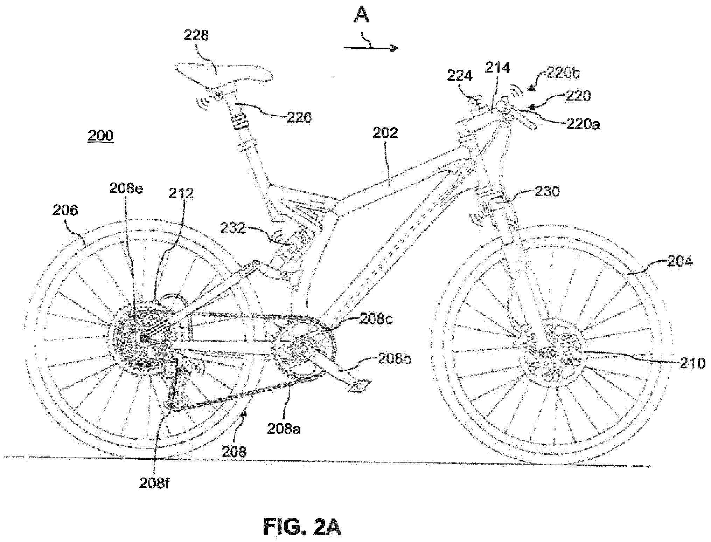

While the example bicycle 100 shown in FIGS. 1A-B is a road bicycle, aspects of the present disclosure may be implemented with bicycles of any type. For instance, FIG. 2A illustrates a right side view of an example mountain bicycle 200. The bicycle 200 includes a frame 202, a front wheel 204, a rear wheel 206, a drivetrain 208, front disk brakes 210, and rear disk brakes 212. The drivetrain 208 includes a chain 208a, a front crank 208b, a front chainring 208c, rear sprockets 208e, and a rear derailleur 208f, which operate in a manner similar to the corresponding components of the drivetrain 108 above.

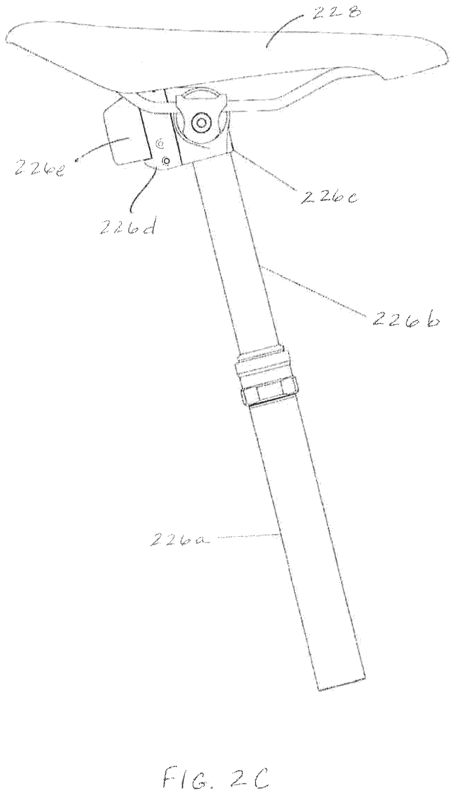

In contrast to the bicycle 100, the bicycle 200 includes other operating-enacting devices such as a height-adjustable seat post assembly 226 and front and rear suspension systems 230, 232. In FIGS. 2A and 2C, the seat post assembly in shown as a wireless, electrically-actuated seat post assembly 226 that allows the position of a seat 228 to be dynamically adjusted. For instance, the adjustable seat post 226 may include an operable valve (not shown) that allows the seat 228 to be dropped to a lower height during a ride to change the position of the user relative to the frame 202 and achieve better handling. The seat post assembly 226 includes a first or lower tube 226a and a second or upper tube 226b. The two tubes 226a, 226b are movable relative to each other to establish a height of the seat 228 relative to the frame 202. A head 226c is fixed to a top of the second tube 226b. A seat post motor unit 226d is mounted to the head 226c and a power supply 226e, in this embodiment a removable battery, is attached to the motor unit 226d. The motor unit 226d may include a motor and a gear transmission. The seat post power supply 226e may supply power to the seat post motor unit 226d. The seat post motor unit 226d is configured to supply torque to the components of the seat post assembly 226 to open and close the operable valve.

The front suspension system is shown as a wireless, electrically-actuated front suspension system 230 that allows the suspension characteristics at the front wheel 204 to be dynamically adjusted. Furthermore, the rear suspension system is shown as a wireless, electrically-actuated rear suspension system 232 that allows the suspension characteristics at the rear wheel 206 to be dynamically adjusted. The front and rear suspension systems 230, 232 may further include power supplies such as batteries that supply power to front and rear suspension motor units, respectively. The motor units may be configured to supply torque to the components of the suspension systems to open and close one or more values to change various suspension characteristics.

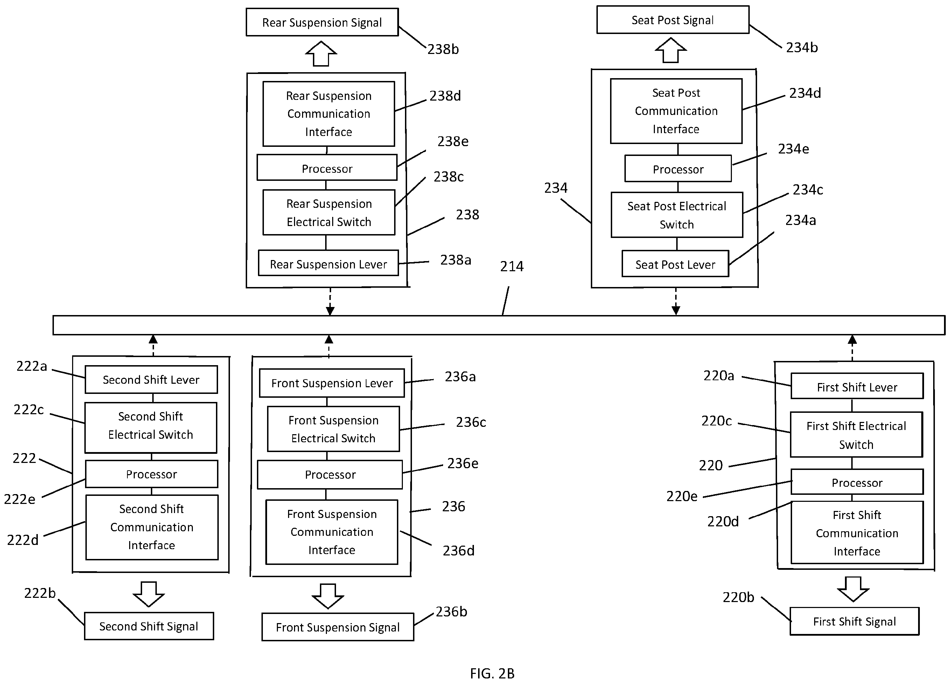

Looking to FIGS. 2A and 2B, the bicycle 200 includes a first or right controller device 220 and a second or left controller device 222. The first and second controller device includes first and second electrical switches 220c, 222c that are actuated by first and second input elements, in this embodiment, first and second shift levers 220a, 222a, respectively. The handlebar assembly 214 includes a flat bar or a riser bar instead of drop bars. As such, the first controller device 220 is coupled to a right side of the flat or riser bar, and the second controller device 222 is coupled to a left side of the flat or riser bar. Additionally, the bicycle 200 may include a seat post controller device 234 and front and rear suspension controller devices 236, 238 coupled to the handlebar assembly 214.

The user can operate the first shift lever 220a and/or the second shift lever 222a as described above to generate a first shift signal 220b and/or a second shift signal 222b, respectively. Similar to the bicycle 100, the first shift signal 220b and/or the second shift signal 222b can be employed to control the rear derailleur 208f. To allow the user to adjust the height of the seat post assembly 226, the seat post controller device 234 includes a seat post electrical switch 234c that is actuated by a seat post input element 234c such as a lever or button.

To allow the user to adjust the characteristics of the front and rear suspension systems 230, 232, the front and rear suspension controller devices 236, 238 include front and rear suspension electrical switches 236c, 238c that are actuated by suspension input elements 236a, 238a such as levers or buttons. Alternatively, the adjustable seat post assembly 226, the adjustable front suspension system 230, and the adjustable rear suspension system 232 may also be configured to receive the first shift signal 220b and/or the second shift signal 222b, so that these devices can also be controlled by operation of the first shift lever 220a and/or the second shift lever 222a.

The seat post and front and rear suspension controller devices 234, 236, 238 include processors 234e, 236e 238e, respectively, which electronically process the manual input received by the seat post and front and rear suspension input elements 234a, 236a, 238a, respectively. The seat post input triggers a seat post controller communication interface 234d to wirelessly send a seat post signal 234b. The front and rear suspension inputs trigger front and rear controller communication interfaces 236d, 238d to wirelessly send front and rear suspension signals 236b, 238b. Correspondingly, the seat post assembly 226 includes a communication interface and a processor that is configured to receive and electrically process the seat post signal 234b to determine a designated response. The front and rear suspensions include communication interfaces and processors that are configured to receive and electronically process the front and rear suspension signals, respectively, to determine a designated response.

FIGS. 1A-E and 2A-C illustrate how various controller devices can be employed to wirelessly communicate control signals to different combinations of operation-enacting devices. The signals from the controller devices may be communicated wirelessly using any technique, protocol, or standard. For instance, Institute of Electrical and Electronics Engineers ("IEEE") 802.11 standards, IEEE 802.15.1 or BLUETOOTH^{®} standards, and/or ANT^{™} or ANT+^{™} standards may be used. In some embodiments, however, control signals may be communicated wirelessly over a proprietary protocol, such as one that operates on top of the physical layer of the IEEE 802.15.4 wireless protocol. Advantageously, the use of a proprietary protocol can enhance security by limiting access to the wireless network to devices specifically configured to communicate under the proprietary protocol. This may thereby reduce the likelihood of unwanted interference from other wireless devices. The bicycle 100 includes a network coordinator device 124 that may be configured to establish and manage the wireless communications between the various devices as described in further detail below. Similarly, the bicycle 200 includes a network coordinator device 224. Alternatively, one of the controller devices or the operation-enacting devices on the bicycle may be the network coordinator.

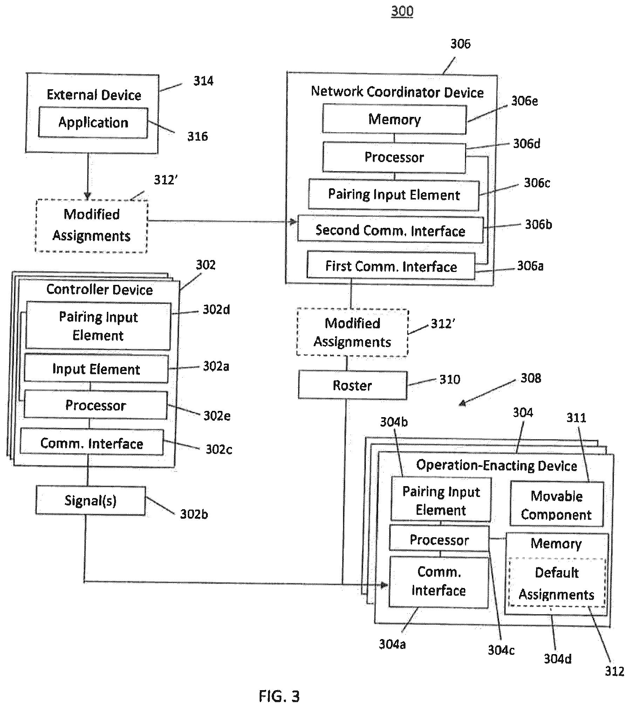

FIG. 3 illustrates an example system 300 for controlling different combinations of operation-enacting devices on a bicycle. The system 300 includes a plurality of controller devices 302. Each controller device 302 includes at least one respective input element 302a configured to receive input from a user. For instance, as described above, the controller devices 302 may include a right controller device and a left controller device coupled to a handlebar assembly, where respective shifter levers act as input elements 302a. In general, input elements 302a may include any variety of shifter, pushbutton, clicker, switch, other toggled device, sensor (e.g., peddling sensor, etc.), or the like. A single controller device 302 may also include more than one input element 302a, (e.g., two shifter levers, a plurality of pushbuttons, etc.).

The system 300 also includes a plurality of operation-enacting devices 304, where each operation-enacting device 304 is configured to enact at least one respective operation on the bicycle. For instance, the operation-enacting devices 304 may include a front derailleur, a rear derailleur, a height-adjustable seat post assembly, a front suspension system, and/or a rear suspension system as described above. Each operation-enacting device 304 may include at least one movable component 311 configured to modify an operative state of the bicycle. In some cases, an operation-enacting device 304 may act on more than one component of the bicycle in a single operation. In other cases, a single operation may include more than one act on one or more components of the bicycle. In yet other cases, the operation may include a physical action and a wireless action, where the wireless action sends wireless signals to cause further action by other cooperative device(s).

The system 300 also includes a network coordinator device 306. The network coordinator device 306 includes a first communication interface 306a configured to communicate wirelessly with the controller devices 302 and the operation-enacting devices 304. Using the first communication interface 306a, the network coordinator device 306 can establish a wireless network 308 that enables communications between the network coordinator device 306, the controller devices 302, and the operation-enacting devices 304. Correspondingly, each controller device 302 includes a communication interface 302c and each operation-enacting device 304 includes a communication interface 304a for communicating with other devices, i.e., receiving and transmitting data/signals, on the wireless network 308. Although the network coordinator device 306 may appear in FIG. 3 as a separate device, the features of a network coordinator device 306 in alternative embodiments may be provided by one or more of the other controller devices 302 and/or operation-enacting devices 304 such as a rear derailleur.

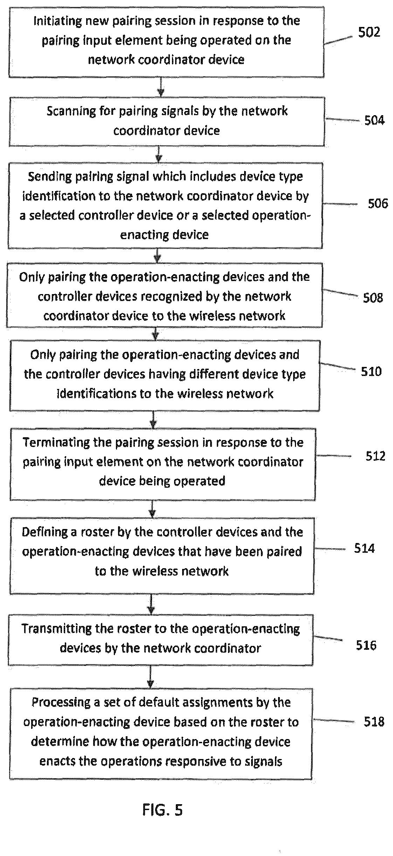

FIG. 5 illustrates a method for establishing a wireless network between a network coordinator device, controller devices and operation-enacting devices and establishing a set of default assignments that determine how the operating-enacting devices enact the operations in response to the signals received from the controller devices. The acts of the method presented below are intended to be illustrative. In some embodiment, the method may be accomplished with one or more additional acts not described, and/or without one or more of the acts discussed. Additionally, the order in which the acts of the method are illustrated in FIG. 5 and described below is not intended to be limiting.

In some embodiments, the method may be implemented in one or more processing device (e.g. digital processor, an analog processor, a digital circuit designed to process information, an analog-circuit designed to process information, a state machine, and/or other mechanisms for electronically processing information). The one or more processing devices include one or more devices executing some or all the acts of the method in response to instructions stored electronically on an electronic storage medium. The one or more processing devices configured through hardware, firmware, and/or software to be specifically designed for execution of one or more of the acts of the method.

The network coordinator device 306 is configured to initiate a new pairing session to pair the controller devices 302, and the operation-enacting devices 304 to the wireless network 308. In act 502, the user selects the network coordinator device 306 from among the controller devices 302 and operation-enacting devices 304 by operating a pairing input element 306c such as a pushbutton, switch, or the like that prompts the selected network coordinator device 306 to initiate a new pairing session. While in the pairing mode, in act 504, the network coordinator device 306 scans for pairing signals from other devices. When the new pairing session is active, the user can selectively pair a controller device 302 or an operation-enacting device 304 to the wireless network 308 by operating a corresponding pairing input element 302d, 304b such as a pushbutton, switch, or the like on the given device to be placed into pairing mode. While in pairing mode, in act 506, the selected device transmits a pairing signal to the network coordinator device 306 in response to operation of the pairing input element 302d, 304b of the selected device. In act 508, the pairing signal allows the network coordinator device 306 to recognize the given device and permit the given device to join the wireless network 308. If a proprietary network protocol is employed for the wireless network 308, only devices configured to communicate according to the proprietary network protocol can be recognized by the network coordinator device 306 and paired.

In some embodiments, in act 506, the pairing signal from a given device provides a respective device type identification, and the network coordinator device 306 only pairs devices having different respective device type identifications in act 510. For instance, the pairing signal may identify a given device to be a rear derailleur. By limiting the pairings to devices with different respective device type identifications, the system 300 will not include more than one rear derailleur. As such, an unknown device cannot imitate another device type that has already been selected for pairing.

In act 512, the user can manually end the pairing session, e.g., by operating the pairing input element 306c on the network coordinator device 306. Alternatively, the network coordinator device 306 may automatically end the pairing session after a set time period has elapsed.

In act 514, a roster 310 is defined by the controller devices 302 and the operation-enacting devices 304 that have been paired to the wireless network 308 at the end of the pairing session. To enhance the integrity of the system 300, no other devices can be paired to the wireless network 308 after the pairing session has ended. By fixing the roster 310, the system 300 only includes the devices 302, 304 selected by the user. This blocks unauthorized devices from joining the wireless network 308 and maliciously or accidentally interfering with the operation of the devices 302, 304 actually selected by the user.

In act 516, when the pairing session ends, the network coordinator device 306 is configured to transmit, to the operation-enacting devices 304, the roster 310 identifying the controller devices 302 and the operation-enacting devices 304 paired to the wireless network 308. In act 518, the operation-enacting devices 304 are configured to determine, based on the roster 310 received from the network coordinator device 306, how to enact operations in response to the signals 302b received from the controller devices 302.

If desired, a new pairing session can be initiated with the network coordinator device 306 to reset the roster 310 and to pair a different set of devices 302, 304. Upon the end of the new pairing session, this different set of devices defines a new roster 310. The new pairing session unpairs and resets all devices that may have been added to the wireless network 308 in a previous pairing session. In general, paired devices 302, 304 cannot be removed from the roster 310 and new devices cannot be added to the roster 310 until a new pairing session is initiated. A device paired to the wireless network 308 can be paired into another wireless network (e.g., on another bicycle system), but that device cannot rejoin the prior wireless network 308 because it is reset when paired to the other wireless network.

The controller devices 302 are configured to transmit, to the operation-enacting devices 304, signals 302b indicating input received by the input elements 302a of the controller devices 302. For instance, the first controller device 120 and the second controller device 122 may wirelessly transmit a first shift signal 120b and a second shift signal 120a as described above to indicate input received by the first shift lever 120a and the second shift lever 122a, respectively.

The operation-enacting devices 304 are configured to process a default set of assignments 312 based on the roster 310 to determine how the operation-enacting devices 304 enact the operations responsive to the signals 302b. The default set of assignments 312 can be transmitted to the each operation-enacting device 304 by the network coordinator device 306, and/or stored locally on each operation-enacting device 304.

For example, after a pairing session is completed, the roster 310 may include a right controller device with a right shift lever, a left controller device with a left shift lever, a front derailleur, and a rear derailleur. The default set of assignments 312 controlling the operation of the operation-enacting devices 304 is determined according to the particular set of devices in the roster 310. For instance, the default set of assignments 312 may provide that with the example roster 310 above: (i) the rear derailleur shifts the chain to a sprocket on the left in response to signals from the left controller device (with no signals from the right controller device); (ii) the rear derailleur shifts the chain to a sprocket on the right in response to signals from the right controller device (with no signals from the left controller device); and (iii) the front derailleur shifts the chain to an alternate chainring in response to simultaneous signals from the right controller device and the left controller device. If the roster 310 includes a different set of devices, the default set of assignments 312 may be different. For example, if the roster 310 includes a height-adjustable seat post assembly and does not include a front derailleur, the seat post assembly lowers the seat in response to the simultaneous signals from the right and left controller devices.

A paired device is considered to remain in the wireless network 308 and the roster 310 does not change even if the paired device becomes inactive or unavailable (e.g., if it loses power or is re-paired to another wireless network).

Each operation enacted by the corresponding operation-enacting device 304 occurs only in response to the signals 302b from a single assigned controller device 302 or a single assigned combination of controller devices 302 as described below. For instance, an operation may involve shifting the chain to a sprocket on the left or inboard with the rear derailleur and such operation only occurs in response to signals from the left controller device. Advantageously, this reduces the likelihood of an unwanted response by an operation-enacting device 304 to a signal from an unknown device.

When a combination of more than one controller device is employed to produce simultaneous signals, e.g., simultaneous signals from the right controller device and the left controller device, the combination of controller devices may be considered to be a single virtual controller device. Thus, an operation may involve the front derailleur shifting the chain to an alternate chainring, and such operation only occurs in response to signals from the single virtual controller device defined by the combination of the right controller device and the left controller device. Alternatively, a single virtual device may be provided by simultaneous signals from two or more inputs on a single device, e.g., simultaneous presses of pushbuttons on a single unified shifter device.

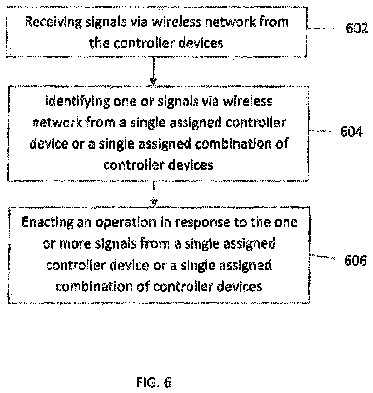

FIG. 6 illustrates a method for controlling the operation-enacting devices. Once the roster 310 is established and the default set of assignments 312 is determined according to the roster 310, in act 602, each operation-enacting device 304 can receive, via the wireless network 308, the signals 302b from the controller devices 302. In act 604, each operation-enacting device 304 can identify the one or more signals 302b from an assigned controller device 302 or from an assigned combination of controller devices. In act 606, each operation-enacting device enacts the operation in response to the one or more signals 302b from the assigned controller device 302 or assigned combination of controller devices 302.

Although the default set of assignments 312 may provide an effective approach for determining how the operation-enacting devices 304 should respond to the signals 302b from the controller devices 302, the user may prefer to use a modified set of assignments 312'. For instance, the modified set of assignments 312' may provide that with the example roster 310 above: (i) the rear derailleur shift the chain to the sprocket on the left in response to signals from the right controller device that do not exceed a threshold amount of time (without signals from the left controller device); (ii) the rear derailleur shift the chain to the sprocket on the right in response to signals from the right controller device that meet or exceed the threshold amount of time (without signals from the left controller device); and (iii) the front derailleur shift the chain to an alternate chainring in response to signals from the left controller device.

In some cases, the user may provide a modified set of assignments 312' where an operation-enacting device 304 does not respond to signals 302b from any controller device 302. For instance, with the example roster 310 above, the modified set of assignments 312' may alternatively provide that: (i) the rear derailleur shifts the chain to a sprocket on the left in response to signals from the left controller device (with no signals from the right controller device); (ii) the rear derailleur shifts the chain to a sprocket on the right in response to signals from the right controller device (with no signals from the left controller device); and (iii) the front derailleur remains idle regardless of what signals are transmitted by the left controller device and/or the right controller device. In general, not every operation by an operation-enacting device 304 must be assigned to an input received by a controller device 302.

Accordingly, aspects of the present disclosure allow the assignments between the controller devices 302 and the operation-enacting devices 304 to be modified to reconfigure the system 300. As shown further in FIG. 3, the network coordinator device 306 may include a second wired and/or wireless communication interface 306b configured to receive the modified set of assignments 312', where the modified set of assignments 312' causes at least one operation enacted by a operation-enacting device 304 to occur in response to the signals 302b from a different controller device 302. The second communication interface 306b may employ a different protocol than the first communication interface 306a, particularly if the first communication interface 306a employs a proprietary protocol.

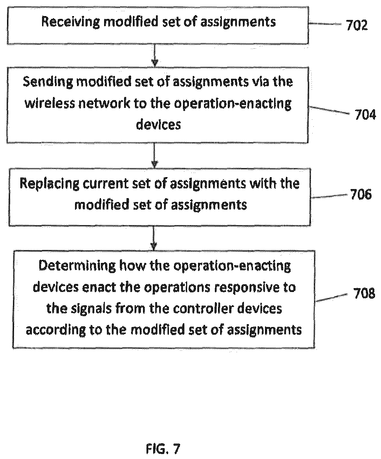

FIG. 7 illustrates a method of modifying the default or current set of assignments. In act 702, the network coordinator device 306 receives a modified set of assignments 312'. In act 704, the network coordinator device 306 is configured to transmit, via the wireless network 308, the modified set of assignments 312' to the operation-enacting devices 304. Correspondingly, in act 706, the operation-enacting devices 304 are configured to replace the default or current set of assignments 312 with the modified set of assignments 312'. In act 708, the operation-enacting devices 304 are configured to determine how the operation-enacting devices 304 enact operations in response to the signals 302b according to the modified set of assignments 312'. If desired, the user can modify the set of assignments again in a similar manner.

According to some embodiments, the second communication interface 306b is configured to wirelessly couple the network coordinator device 306 to an external computing device 314, such as a smart phone, computing tablet, laptop, personal computer, or the like. The external computing device 314 may include an application 316, such as a mobile application or other computer software. The application 316 is configured to receive the modified set of assignments 312' from a user and to transmit the modified set of assignments 312' to the network coordinator device 306.

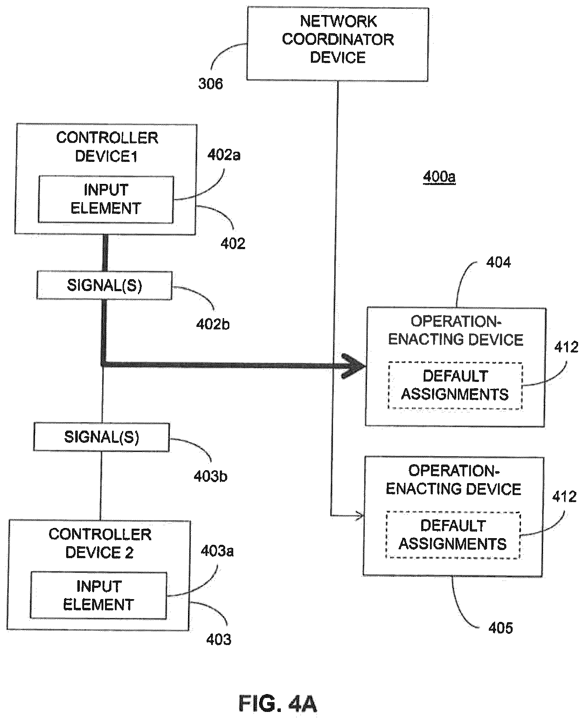

FIGS. 4A-C illustrate example scenarios 400a-c that further demonstrate how a modified set of assignments may be implemented in the system 300. The controller devices 302 paired to the wireless network 308 include a first controller device 402 and a second controller device 403. The first controller device 402 includes a first input element 402a configured to receive a first input from the user, where the first input modifies a state of the first input element 402a. The second controller device 403 includes a second input element 403a configured to receive a second input from the user, where the second input modifies a state of the second input element 403a. For instance, the first input element 402a may be a right shift lever and the second input element 403a may be a left shift lever. The user can engage either shift lever so that the state of the shift lever can be modified to any of the following: (i) an active state when engaged by the user for less than a threshold amount of time, (ii) an inactive state when not engaged by the user, or (iii) an update state when continuously engaged by the user for at least the threshold amount of time. The signals 302b from the controller devices 302 include a first signal 402b from the first controller device 402 and a second signal 403b from the second controller device 403, where the first signal 402b indicates the modified state of the first input element 402a and the second signal 403b indicates the modified state of the second input element 403a. The signals 302b from a particular controller device 302 may include a device type identification for the particular controller device 302, an input identifier for the input element 302a on the particular controller device 302 (in case there is more than one input element 302a), and information on the modified state for the input element 302a.

The operation-enacting devices 304 include a first operation-enacting device 404 and a second operation-enacting device 405. For instance, the first operation-enacting device 404 may be a front suspension system and the second operation-enacting device 405 may be a rear suspension system. According to a first set of assignments 412 shown in FIG. 4A, the first operation-enacting device 404 is configured to (i) identify the first signal 402b among the signals 302b received from the controller devices 302, (ii) identify the modified state of the first input element 402a, and (iii) enact a first operation on the bicycle in response to the modified state of the first input element 402a.

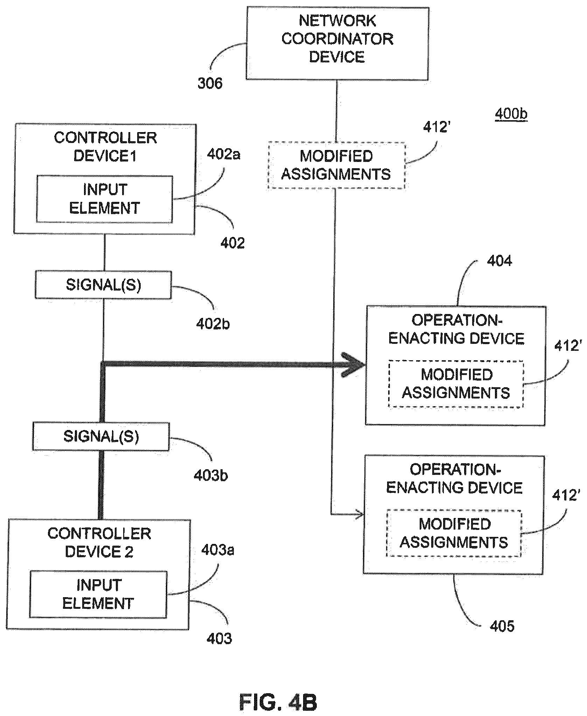

As shown in FIG. 4B, the network coordinator device 306 is configured to (i) receive a second set of assignments 412', and (ii) transmit the second set of assignments 412' to the first operation-enacting device 404 via the wireless network 308. The first operation-enacting device 404 is configured to receive the second signal 403b from the second controller device 403 via the wireless network 308. Responsive to receiving the second set of assignments 412', the first operation-enacting device 404 is modified to: (i) identify the modified state of the second input element 403a, (ii) enact the first operation on the bicycle in response to the modified state of the second input element 403a, and (iii) remain idle in response to the first signal from the first controller device 402.

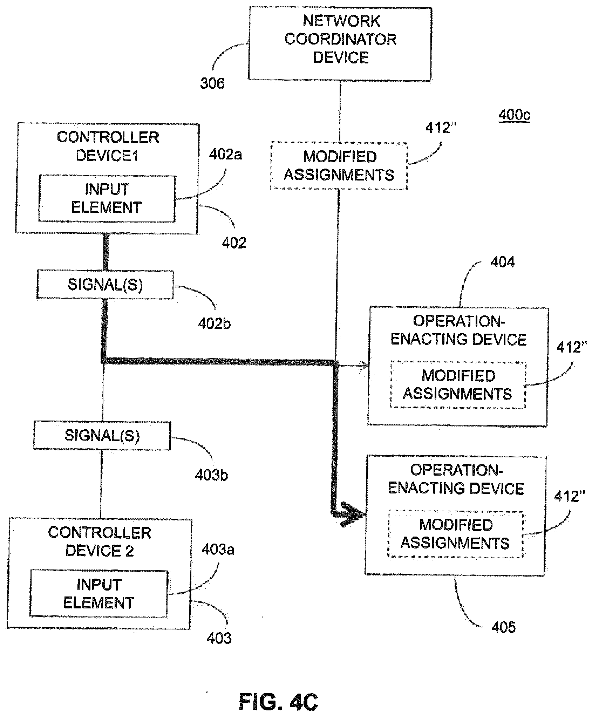

As shown in FIG. 4C, the network coordinator device is configured to (i) receive a third set of assignments 412", and (ii) transmit the third set of assignments 412" to the operation-enacting devices 304 via the wireless network 308. The second operation-enacting device 405 is configured to receive the first signal 402b from the first controller device 402 via the wireless network 308. Responsive to receiving the third set of assignments 412", (i) the second operation-enacting device 405 is configured to identify the modified state of the first input element 402a and to enact a second operation on the bicycle in response to the modified state of the first input element 402a, and (ii) the first operation-enacting device 404 is modified to remain idle in response to the first signal from the first controller device.

Accordingly, the embodiments described above provide a reconfigurable control system for the components of the bicycle. Despite this desirable feature, the embodiments can secure the control system against such access by unknown devices. In particular, the embodiments initiate a pairing session that allows the user to select controller devices and operation-enacting devices for the wireless network. Once the pairing session is complete, the roster of devices paired to the network is fixed and unchangeable, even though the assignments between the controller devices and the operation-enacting devices already on the network can still be changed by the user. As such, unknown devices cannot join the wireless network and interfere with the control system. Additionally, the embodiments do not allow duplicate device types to be paired to the wireless network, so that an unknown device cannot imitate another device that has been selected to be paired by user. Further, the embodiments only permit each operation enacted by an operation-enacting device to occur in response to the signals from a single assigned controller device or a single assigned combination of controller devices thereby reducing the likelihood of an unwanted response by an operation-enacting device to a signal from an unknown device. Moreover, the embodiments may employ a proprietary network protocol to enhance security by limiting access to the wireless network to devices that can operate under the protocol.

Aspects of the embodiments engage in computer processing, for instance, to receive and transmit wireless signals and to determine how to respond to such signals. For example, the network coordinator device 306 may include one or more processors 306d configured to execute program instructions stored on computer-readable media 306e, which when executed cause the one or more processors 306d to: (i) establish, via the first communication interface 306c, a pairing session that allows the controller devices 302 and the operation-enacting devices 304 to be paired to a wireless network 308, and (ii) transmit to the operation-enacting devices 304, via the first communication interface 306c, a roster 310 identifying the controller devices 302 and the operation-enacting devices 304 paired to the wireless network 308.

For another example, an operation-enacting device 304 may include one or more processors 304c configured to execute program instructions stored on computer-readable media 304d, the program instructions causing the one or more processors 306d to process the default set of assignments 312 based on the roster 310, where the default set of assignments 312 indicates which of the controller devices 302 is selected to cause the operation-enacting device 304 to respond by modifying the operative state of the bicycle. Additionally, the one or more processors 304c of the operation-enacting devices 304 receives, via the communication interface 304a, a modified set of assignments 312' from the network coordinator device 306, where the modified set of assignments 312' causes the operation-enacting device 304 to modify the operative state of the bicycle in response to the signals 302b from a different one of the controller devices, and the program instructions cause the one or more processors 304c to replace the default or current set of assignments 312 with the modified set of assignments 312'.

The one or more processors 302e, 304c, 306d employed by the embodiments may include a general processor, digital signal processor, an application specific integrated circuit (ASIC), field programmable gate array (FPGA), analog circuit, digital circuit, combinations thereof, or other now known or later developed processor. The processor may be a single device or combinations of devices, such as through shared or parallel processing.

Aspects of the embodiments may also employ computer memory. Such memory may be a volatile memory or a non-volatile memory. The memory may include one or more of a read only memory (ROM), random access memory (RAM), a flash memory, an electronic erasable program read only memory (EEPROM), or other type of memory. The memory may be removable from the corresponding device, such as a secure digital (SD) memory card. Computer memory includes any one or more of a computer-readable medium and other equivalents and successor media, in which data or instructions may be stored. In general, a computer-readable medium includes any medium that is capable of storing, encoding or carrying a set of instructions for execution by a processor or that cause a computer system to perform any one or more of the methods or operations disclosed herein.

To power wireless communications and computer processing, embodiments employ power supplies, which may be stored internal to the operating device, or stored external to the operating device. The power supply may include a combination of multiple batteries or other power providing devices. Specially fitted or configured battery types, or standard battery types such as CR 2012, CR 2016, and/or CR 2032 may be used. In some embodiments, the devices in a system are all individually powered, e.g. by a dedicated battery.

As described above, the embodiments employ communication interfaces. Such communication interfaces are configured to send data such as control signals and/or commands to bicycle components. In particular, the communication interface provides for wireless communications in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

It is understood that the illustration or other representation of devices, such as the network coordinator devices, the controller devices, and the operation-enacting devices, include (even if not expressly labeled) any combination of processor(s), memory device(s) (e.g., computer-readable media storing program instructions for execution by processor(s)), communication interface(s), and power supply necessary to achieve the disclosed features.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Although some of the acts and/or functions described in this disclosure have been described as being performed by a particular entity, the acts and/or functions can be performed by any entity, such as those entities described in this disclosure. Further, although the acts and/or functions have been recited in a particular order, the acts and/or functions need not be performed in the order recited. However, in some instances, it can be desired to perform the acts and/or functions in the order recited. Further, each of the acts and/or functions can be performed responsive to one or more of the other acts and/or functions. Also, not all of the acts and/or functions need to be performed to achieve one or more of the benefits provided by this disclosure, and therefore not all of the acts and/or functions are required
In certain circumstances, multitasking and parallel processing may be advantageous.

Moreover, the separation of various system components in the embodiments described above should not be understood as requiring such separation in all embodiments, and it should be understood that any described program components and systems can generally be integrated together in a single software product or packaged into multiple software products.

## Claims

1. A system (300) for a bicycle (100), comprising:
a plurality of controller devices (302), wherein each controller device (302) includes at least one respective input element (302a) configured to receive input from a user;
a plurality of operation-enacting devices (304), wherein each operation-enacting device (304) is configured to enact at least one respective operation on the bicycle (100); and
a network coordinator device (306) configured to (i) establish a wireless network (308) that enables communications between the network coordinator device (306), the controller devices (302), and the operation-enacting devices (304), and (ii) transmit to the operation-enacting devices (304), via the wireless network (308), a roster (310) identifying the controller devices (302) paired to the wireless network (308) and the operation-enacting devices (304) paired to the wireless network (308),
wherein the controller devices (302) are further configured to transmit to the operation-enacting devices (304), via the wireless network (308), signals (302b) indicating input received by the input elements (302a) of the controller devices (302), and
wherein the operation-enacting devices (304) are configured to process a default set of assignments (312) to determine, based on the roster (310) received from the network coordinator device, how the operation-enacting devices (304) enact the operations responsive to the signals (302b) received from the controller devices, and
wherein the default set of assignments (312) causing each operation to be enacted by the corresponding operation-enacting device (304) only in response to one or more of the signals (302b) from a single assigned controller device (302) or a single assigned particular combination of controller devices (302), wherein the enaction of the corresponding operation-enacting device (304) depends on whether one or more of the signals are received.

2. The system (300) of claim 1, wherein each operation-enacting device (304) is further configured to (i) receive, via the wireless network (308), the signals (302b) from the controller devices (302), (ii) identify the signals (302b) from the assigned controller device (302), and (¡ii) enact the operation in response to the signals (302b) from the assigned controller device (302).

3. The system (300) of one of the preceding claims, wherein the network coordinator device (306) includes a communication interface configured to receive a modified set of assignments (312'), the modified set of assignments (312') causing at least one of the operations to be enacted by the corresponding operation-enacting device (304) in response to one or more of the signals (302b) from a different one of the controller devices (302),
the network coordinator device (306) is configured to transmit, via the wireless network (308), the modified set of assignments (312') to the operation-enacting devices (304), and
the operation-enacting devices (304) are configured to replace the default set of assignments (312) with the modified set of assignments (312') and to determine how the operation-enacting devices (304) enact the operations responsive to the signals (302b) according to the modified set of assignments (312').

4. The system (300) of one of the preceding claims, wherein, the network coordinator device, the operation-enacting devices (304), and the controller are further configured such that when the network coordinator device (306) establishes the wireless network (308), the operation-enacting devices (304) and the controller devices (302) each provide a respective device type identification, and the network coordinator device (306) only pairs, to the wireless network (308), the operation-enacting devices (304) and the controller devices (302) having different respective device type identifications.

5. The system (300) of one of the preceding claims, wherein the controller devices (302) include a first controller device (402) and the operation-enacting devices (304) include a first operation-enacting device (404),
the first controller device (402) includes a first input element (402a) configured to receive a first input from the user, the first input modifying a state of the first input element (402a),
the signals (302b) include a first signal (402b) from the first controller device (402), the first signal (402b) indicating the modified state of the first input element (402a), and
according to a first set of assignments (412), the first operation-enacting device (404) is configured to (i) identify the first signal (402b) among the signals (302b) received from the controller devices (302), (ii) identify the modified state of the first input element (402a), and (iii) enact a first operation on the bicycle in response to the modified state of the first input element (402a).

6. The system (300) of claim 5, wherein the first input element (402a) is configured such that the state of the first input element (402a) can be modified to any of the following: (i) an active state when engaged by the user for less than a threshold amount of time, (ii) an inactive state when not engaged by the user, or (iii) an update state when continuously engaged by the user for at least the threshold amount of time.

7. The system (300) of claim 5 or 6, wherein the network coordinator device (306) is configured to (i) receive a second set of assignments (412'), and (ii) transmit the second set of assignments (412') to the first operation-enacting device (404) via the wireless network (308),
the controller devices (302) include a second controller device (403),
the second controller device (403) includes a second input element configured to receive a second input from the user, the second input modifying a state of the second input element,
the signals (302b) include a second signal (403b) from the second controller device (403), the second signal (403b) indicating the modified state of the second input element (403a),
the first operation-enacting device (404) is configured to receive the second signal (403b) from the second controller device (403) via the wireless network (308), and
responsive to receiving the second set of assignments (412'), the first operation-enacting device (404) is modified to: (i) identify the modified state of the second input element (403a), (ii) enact the first operation on the bicycle (100) in response to the modified state of the second input element (403a), and (iii) remain idle in response to the first signal (402b) from the first controller device (402).

8. The system (300) of one of the claims 5 to 7, wherein the network coordinator device (306) is configured to (i) receive a second set of assignments (412'), and (ii) transmit the second set of assignments (412') to the operation-enacting devices (304) via the wireless network (308),
the operation-enacting devices (304) include a second operation-enacting device (405),
the second operation-enacting device (405) is configured to receive the first signal (402b) from the first controller device (402) via the wireless network (308), and
responsive to receiving the second set of assignments (412'), (i) the second operation-enacting (405) device is configured to identify the modified state of the first input element (402a) and to enact a second operation on the bicycle (100) in response to the modified state of the first input element (402a), and (ii) the first operation-enacting (404) device is modified to remain idle in response to the first signal (402b) from the first controller device (402).

9. The system (300) of one of the preceding claims, wherein one of the operations acts on more than one component of the bicycle (100).

10. The system (300) of one of the preceding claims, wherein one of the operations includes more than one act on one or more components of the bicycle (100).

## Patentansprüche

1. System (300) für ein Fahrrad (100), das umfasst:
eine Mehrzahl von Steuervorrichtungen (302), wobei jede Steuervorrichtung (302) wenigstens ein entsprechendes Eingabeelement (302a) umfasst, das dazu eingerichtet ist, Eingaben eines Benutzers zu empfangen;
eine Mehrzahl von auf den Betrieb einwirkenden Vorrichtungen (304), wobei jede auf den Betrieb einwirkende Vorrichtung (304) dazu eingerichtet ist, wenigstens einen entsprechenden Vorgang an dem Fahrrad (100) auszuführen; und
eine Netzwerkkoordinatorvorrichtung (306), die dazu eingerichtet, (i) ein drahtloses Netzwerk (308) einzurichten, das die Kommunikation zwischen der Netzwerkkoordinatorvorrichtung (306), den Steuervorrichtungen (302) und den auf den Betrieb einwirkenden Vorrichtungen (304) ermöglicht, und (ii) eine Liste (310), die die mit dem drahtlosen Netzwerk (308) gekoppelten Steuervorrichtungen (302) und die mit dem drahtlosen Netzwerk (308) gekoppelten auf den Betrieb einwirkenden Vorrichtungen (304) identifiziert, über das drahtlose Netzwerk (308) an die auf den Betrieb einwirkenden Vorrichtungen (304) zu übertragen,
wobei die Steuervorrichtungen (302) ferner dazu eingerichtet sind, Signale (302b), die von den Eingabeelementen (302a) der Steuervorrichtungen (302) empfangene Eingaben anzeigen, über das drahtlose Netzwerk (308) an die auf den Betrieb einwirkenden Vorrichtungen (304) zu übertragen, und
wobei die auf den Betrieb einwirkenden Vorrichtungen (304) dazu eingerichtet sind, einen Standardsatz von Zuweisungen (312) zu verarbeiten, um auf der Grundlage der von der Netzwerkkoordinatorvorrichtung empfangenen Liste (310) zu bestimmen, wie die auf den Betrieb einwirkenden Vorrichtungen (304) die Vorgänge als Reaktion auf die von den Steuervorrichtungen empfangenen Signale (302b) ausführen, und
wobei der Standardsatz von Zuweisungen (312) bewirkt, dass jeder Vorgang von der entsprechenden auf den Betrieb einwirkenden Vorrichtung (304) nur als Reaktion auf eines oder mehrere der Signale (302b) von einer einzigen zugewiesenen Steuervorrichtung (302) oder einer einzigen zugewiesenen bestimmten Kombination von Steuervorrichtungen (302) ausgeführt wird, wobei das Ausführen durch die entsprechende auf den Betrieb einwirkende Vorrichtung (304) davon abhängt, ob eines oder mehrere der Signale empfangen werden.

2. System (300) nach Anspruch 1, wobei jede auf den Betrieb einwirkende Vorrichtung (304) ferner dazu eingerichtet ist, (i) über das drahtlose Netzwerk (308) die Signale (302b) von den Steuervorrichtungen (302) zu empfangen, (ii) die Signale (302b) von der zugewiesenen Steuervorrichtung (302) zu identifizieren und (iii) den Vorgang als Reaktion auf die Signale (302b) von der zugewiesenen Steuervorrichtung (302) auszuführen.

3. System (300) nach einem der vorangehenden Ansprüche, wobei
die Netzwerkkoordinatorvorrichtung (306) eine Kommunikationsschnittstelle umfasst, die zum Empfangen eines geänderten Satzes von Zuweisungen (312') eingerichtet ist, wobei der geänderte Satz von Zuweisungen (312') bewirkt, dass wenigstens einer der Vorgänge von der entsprechenden auf den Betrieb einwirkenden Vorrichtung (304) als Reaktion auf eines oder mehrere der Signale (302b) von einer anderen der Steuervorrichtungen (302) ausgeführt wird,
die Netzwerkkoordinatorvorrichtung (306) dazu eingerichtet ist, den geänderten Satz von Zuweisungen (312') über das drahtlose Netzwerk (308) an die auf den Betrieb einwirkenden Vorrichtungen (304) zu übertragen, und
die auf den Betrieb einwirkenden Vorrichtungen (304) dazu eingerichtet sind, den Standardsatz von Zuweisungen (312) durch den geänderten Satz von Zuweisungen (312') zu ersetzen und zu bestimmen, wie die auf den Betrieb einwirkenden Vorrichtungen (304) die Vorgänge als Reaktion auf die Signale (302b) entsprechend dem geänderten Satz von Zuweisungen (312') ausführen.

4. System (300) nach einem der vorangehenden Ansprüche, wobei die Netzwerkkoordinatorvorrichtung, die auf den Betrieb einwirkenden Vorrichtungen (304) und die Steuervorrichtung ferner derart eingerichtet sind, dass die auf den Betrieb einwirkenden Vorrichtungen (304) und die Steuervorrichtungen (302) jeweils eine entsprechende Vorrichtungstyp-Identifikation bereitstellen, und die Netzwerkkoordinatorvorrichtung (306) nur die auf den Betrieb einwirkenden Vorrichtungen (304) und die Steuervorrichtungen (302) mit unterschiedlichen entsprechenden Vorrichtungstyp-Identifikationen mit dem drahtlosen Netzwerk (308) koppelt, wenn die Netzwerkkoordinatorvorrichtung (306) das drahtlose Netzwerk (308) einrichtet.

5. System (300) nach einem der vorangehenden Ansprüche, wobei
die Steuervorrichtungen (302) eine erste Steuervorrichtung (402) umfassen und die auf den Betrieb einwirkenden Vorrichtungen (304) eine erste auf den Betrieb einwirkende Vorrichtung (404) umfassen,
die erste Steuervorrichtung (402) ein erstes Eingabeelement (402a) umfasst, das dazu eingerichtet ist, eine erste Eingabe von dem Benutzer zu empfangen, wobei die erste Eingabe einen Zustand des ersten Eingabeelements (402a) ändert,
die Signale (302b) ein erstes Signal (402b) von der ersten Steuervorrichtung (402) umfassen, wobei das erste Signal (402b) den geänderten Zustand des ersten Eingabeelements (402a) anzeigt, und
gemäß einem ersten Satz von Zuweisungen (412) die erste auf den Betrieb einwirkende Vorrichtung (404) dazu eingerichtet ist, (i) das erste Signal (402b) unter den von den Steuervorrichtungen (302) empfangenen Signalen (302b) zu identifizieren, (ii) den geänderten Zustand des ersten Eingabeelements (402a) festzustellen und (iii) einen ersten Vorgang an dem Fahrrad als Reaktion auf den geänderten Zustand des ersten Eingabeelements (402a) auszuführen.

6. System (300) nach Anspruch 5, wobei das erste Eingabeelement (402a) derart eingerichtet ist, dass der Zustand des ersten Eingabeelements (402a) in einen der folgenden Zustände geändert werden kann: (i) einen aktiven Zustand, wenn es vom Benutzer für weniger als eine Schwellendauer bedient wird, (ii) einen inaktiven Zustand, wenn es vom Benutzer nicht bedient wird, oder (iii) einen Aktualisierungszustand, wenn es vom Benutzer für wenigstens die Schwellendauer bedient wird.

7. System (300) nach Anspruch 5 oder 6, wobei die Netzwerkkoordinatorvorrichtung (306) dazu eingerichtet ist, (i) einen zweiten Satz von Zuweisungen (412') zu empfangen und (ii) den zweiten Satz von Zuweisungen (412') über das drahtlose Netzwerk (308) an die erste auf den Betrieb einwirkende Vorrichtung (404) zu übertragen,
die Steuervorrichtungen (302) eine zweite Steuervorrichtung (403) umfassen,
die zweite Steuervorrichtung (403) ein zweites Eingabeelement umfasst, das dazu eingerichtet ist, eine zweite Eingabe von dem Benutzer zu empfangen, wobei die zweite Eingabe einen Zustand des zweiten Eingabeelements ändert,
die Signale (302b) ein zweites Signal (403b) von der zweiten Steuervorrichtung (403) umfassen, wobei das zweite Signal (403b) den geänderten Zustand des zweiten Eingabeelements (403a) anzeigt,
die erste auf den Betrieb einwirkende Vorrichtung (404) dazu eingerichtet ist, das zweite Signal (403b) über das drahtlose Netzwerk (308) von der zweiten Steuervorrichtung (403) zu empfangen, und
als Reaktion auf den Empfang des zweiten Satzes von Zuweisungen (412') die erste auf den Betrieb einwirkende Vorrichtung (404) geändert wird, um (i) den geänderten Zustand des zweiten Eingabeelements (403a) festzustellen, (ii) den ersten Vorgang an dem Fahrrad (100) als Reaktion auf den geänderten Zustand des zweiten Eingabeelements (403a) auszuführen und (iii) als Reaktion auf das erste Signal (402b) von der ersten Steuervorrichtung (402) im Leerlauf zu bleiben.

8. System (300) nach einem der Ansprüche 5 bis 7, wobei
die Netzwerkkoordinatorvorrichtung (306) dazu eingerichtet ist, (i) einen zweiten Satz von Zuweisungen (412') zu empfangen und (ii) den zweiten Satz von Zuweisungen (412') über das drahtlose Netzwerk (308) an die auf den Betrieb einwirkenden Vorrichtungen (304) zu übertragen,
die auf den Betrieb einwirkenden Vorrichtungen (304) eine zweite auf den Betrieb einwirkende Vorrichtung (405) umfassen,
die zweite auf den Betrieb einwirkende Vorrichtung (405) dazu eingerichtet ist, das erste Signal (402b) über das drahtlose Netzwerk (308) von der ersten Steuervorrichtung (402) zu empfangen, und
als Reaktion auf den Empfang des zweiten Satzes von Zuweisungen (412') (i) die zweite auf den Betrieb einwirkende Vorrichtung (405) dazu eingerichtet ist, den geänderten Zustand des ersten Eingabeelements (402a) festzustellen und einen zweiten Vorgang an dem Fahrrad (100) als Reaktion auf den geänderten Zustand des ersten Eingabeelements (402a) auszuführen, und (ii) die erste auf den Betrieb einwirkende Vorrichtung (404) derart geändert wird, dass sie als Reaktion auf das erste Signal (402b) von der ersten Steuervorrichtung (402) im Leerlauf bleibt.

9. System (300) nach einem der vorangehenden Ansprüche, wobei einer der Vorgänge auf mehr als eine Komponente des Fahrrads (100) wirkt.

10. System (300) nach einem der vorangehenden Ansprüche, wobei einer der Vorgänge mehr als eine Handlung an einer oder mehreren Komponenten des Fahrrads (100) umfasst.

## Revendications

1. Système (300) pour bicyclette (100), comprenant :
une pluralité de dispositifs de commande (302), chaque dispositif de commande (302) comprenant au moins un élément d'entrée (302a) respectif conçu pour recevoir une entrée d'un utilisateur ;
une pluralité de dispositifs d'exécution d'opération (304), chaque dispositif d'exécution d'opération (304) étant conçu pour exécuter au moins une opération respective sur la bicyclette (100) ; et
un dispositif coordinateur de réseau (306) conçu pour (i) établir un réseau sans fil (308) qui permet des communications entre le dispositif coordinateur de réseau (306), les dispositifs de commande (302) et les dispositifs d'exécution d'opération (304), et (ii) transmettre aux dispositifs d'exécution d'opération (304), via le réseau sans fil (308), une liste (310) identifiant les dispositifs de commande (302) appariés au réseau sans fil (308) et les dispositifs d'exécution d'opération (304) appariés au réseau sans fil (308),
dans lequel les dispositifs de commande (302) sont en outre conçus pour transmettre aux dispositifs d'exécution d'opération (304), via le réseau sans fil (308), des signaux (302b) indiquant une entrée reçue par les éléments d'entrée (302a) des dispositifs de commande (302), et
dans lequel les dispositifs d'exécution d'opération (304) sont conçus pour traiter un ensemble d'affectations par défaut (312) pour déterminer, sur la base de la liste (310) reçue du dispositif coordinateur de réseau, comment les dispositifs d'exécution d'opération (304) exécutent les opérations en réponse aux signaux (302b) reçus des dispositifs de commande, et
dans lequel l'ensemble d'affectations par défaut (312) amène chaque opération à être exécutée par le dispositif d'exécution d'opération (304) correspondant, uniquement en réponse à un ou plusieurs des signaux (302b) provenant d'un seul dispositif de commande (302) attribué ou d'une seule combinaison particulière attribuée de dispositifs de commande (302), dans lequel l'activation du dispositif d'exécution d'opération (304) correspondant dépend de la réception d'un ou de plusieurs des signaux.

2. Système (300) selon la revendication 1, dans lequel chaque dispositif d'exécution d'opération (304) est en outre conçu pour (i) recevoir, via le réseau sans fil (308), les signaux (302b) provenant des dispositifs de commande (302), (ii) identifier les signaux (302b) provenant du dispositif de commande attribué (302), et (iii) exécuter l'opération en réponse aux signaux (302b) provenant du dispositif de commande attribué (302).

3. Système (300) selon l'une des revendications précédentes, dans lequel le dispositif coordinateur de réseau (306) comprend une interface de communication conçue pour recevoir un ensemble modifié d'affectations (312'), l'ensemble modifié d'affectations (312') provoquant au moins une des opérations devant être exécutée par le dispositif d'exécution d'opération (304) correspondant en réponse à un ou plusieurs des signaux (302b) provenant d'un dispositif différent parmi les dispositifs de commande (302),
le dispositif coordinateur de réseau (306) est conçu pour transmettre, via le réseau sans fil (308), l'ensemble modifié d'affectations (312') aux dispositifs d'exécution d'opération (304), et
les dispositifs d'exécution d'opération (304) sont conçus pour remplacer l'ensemble d'affectations par défaut (312) par l'ensemble modifié d'affectations (312') et pour déterminer comment les dispositifs d'exécution d'opération (304) exécutent les opérations en réponse aux signaux (302b) selon l'ensemble modifié d'affectations (312').

4. Système (300) selon l'une des revendications précédentes, dans lequel le dispositif coordinateur de réseau, les dispositifs d'exécution d'opération (304) et le dispositif de commande sont en outre conçus de telle sorte que lorsque le dispositif coordinateur de réseau (306) établit le réseau sans fil (308), les dispositifs d'exécution d'opération (304) et les dispositifs de commande (302) fournissent chacun une identification de type de dispositif respectif, et le dispositif coordinateur de réseau (306) associe uniquement, au réseau sans fil (308), les dispositifs d'exécution d'opération (304) et les dispositifs de commande (302) ayant des identifications de type de dispositif respectif différentes.

5. Système (300) selon l'une des revendications précédentes, dans lequel les dispositifs de commande (302) comprennent un premier dispositif de commande (402) et les dispositifs d'exécution d'opération (304) comprennent un premier dispositif d'exécution d'opération (404),
le premier dispositif de commande (402) comprend un premier élément d'entrée (402a) conçu pour recevoir une première entrée de l'utilisateur, la première entrée modifiant un état du premier élément d'entrée (402a),
les signaux (302b) comprennent un premier signal (402b) provenant du premier dispositif de commande (402), le premier signal (402b) indiquant l'état modifié du premier élément d'entrée (402a), et
selon un premier ensemble d'affectations (412), le premier dispositif d'exécution d'opération (404) est conçu pour (i) identifier le premier signal (402b) parmi les signaux (302b) reçus des dispositifs de commande (302), (ii) identifier l'état modifié du premier élément d'entrée (402a), et (iii) effectuer une première opération sur la bicyclette en réponse à l'état modifié du premier élément d'entrée (402a).

6. Système (300) selon la revendication 5, dans lequel le premier élément d'entrée (402a) est conçu de telle sorte que l'état du premier élément d'entrée (402a) peut être modifié en l'un quelconque des éléments suivants : (i) un état actif lorsqu'il est engagé par l'utilisateur pendant moins d'une durée seuil, (ii) un état inactif lorsqu'il n'est pas engagé par l'utilisateur, ou (iii) un état de mise à jour lorsqu'il est engagé en continu par l'utilisateur pendant au moins la durée seuil.

7. Système (300) selon la revendication 5 ou 6, dans lequel le dispositif coordinateur de réseau (306) est conçu pour (i) recevoir un deuxième ensemble d'affectations (412'), et (ii) transmettre le deuxième ensemble d'affectations (412') au premier dispositif d'exécution d'opération (404) via le réseau sans fil (308),
les dispositifs de commande (302) comprennent un deuxième dispositif de commande (403),
le deuxième dispositif de commande (403) comprend un deuxième élément d'entrée conçu pour recevoir une deuxième entrée provenant de l'utilisateur, la deuxième entrée modifiant un état du deuxième élément d'entrée,
les signaux (302b) comprennent un deuxième signal (403b) provenant du deuxième dispositif de commande (403), le deuxième signal (403b) indiquant l'état modifié du deuxième élément d'entrée (403a),
le premier dispositif d'exécution d'opération (404) est conçu pour recevoir le deuxième signal (403b) provenant du deuxième dispositif de commande (403) via le réseau sans fil (308), et
en réponse à la réception du deuxième ensemble d'affectations (412'), le premier dispositif d'exécution d'opération (404) est modifié pour : (i) identifier l'état modifié du deuxième élément d'entrée (403a), (ii) exécuter la première opération sur la bicyclette (100) en réponse à l'état modifié du deuxième élément d'entrée (403a), et (iii) rester inactif en réponse au premier signal (402b) provenant du premier dispositif de commande (402).

8. Système (300) selon l'une des revendications 5 à 7, dans lequel le dispositif coordinateur de réseau (306) est conçu pour (i) recevoir un deuxième ensemble d'affectations (412'), et (ii) transmettre le deuxième ensemble d'affectations (412') aux dispositifs d'exécution d'opération (304) via le réseau sans fil (308),
les dispositifs d'exécution d'opération (304) comprennent un deuxième dispositif d'exécution d'opération (405),
le deuxième dispositif d'exécution d'opération (405) est conçu pour recevoir le premier signal (402b) provenant du premier dispositif de commande (402) via le réseau sans fil (308), et
en réponse à la réception du deuxième ensemble d'affectations (412'), (i) le deuxième dispositif d'exécution d'opération (405) est conçu pour identifier l'état modifié du premier élément d'entrée (402a) et pour exécuter une deuxième opération sur la bicyclette (100) en réponse à l'état modifié du premier élément d'entrée (402a), et (ii) le premier dispositif d'exécution d'opération (404) est modifié pour rester inactif en réponse au premier signal (402b) provenant du premier dispositif de commande (402).

9. Système (300) selon l'une des revendications précédentes, dans lequel l'une des opérations agit sur plus d'un composant de la bicyclette (100).

10. Système (300) selon l'une des revendications précédentes, dans lequel l'une des opérations comprend plus d'un acte sur un ou plusieurs composants de la bicyclette (100).
